# EUROPÄISCHE PATENTSCHRIFT

(11) **EP 2 571 740 B1**
(45) Veröffentlichungstag und Bekanntmachung des Hinweises auf die Patenterteilung: **08.06.2016**
(21) Anmeldenummer: 11717496.1
(22) Anmeldetag: 21.04.2011
(51) Int. Cl.: B60W 40/08, B60L 11/18

(54) **VORRICHTUNG ZUM ENERGIEMANAGEMENT IN EINEM ELEKTROFAHRZEUG**
DEVICE FOR PERFORMING ENERGY MANAGEMENT IN AN ELECTRIC VEHICLE
DISPOSITIF POUR LA GESTION DE L'ÉNERGIE SUR UN VÉHICULE ÉLECTRIQUE

(30) Priorität: 19.05.2010 DE 102010021031
(43) Veröffentlichungstag der Anmeldung: 27.03.2013
(73) Patentinhaber: Audi AG, 85045 Ingolstadt (DE)
(72) Erfinder: UNGERMANN, Jochen, 85055 Ingolstadt (DE)
(74) Vertreter: Herbst, Matthias Heinz
(86) Internationale Anmeldenummer: PCT/EP2011/002062
(87) Internationale Veröffentlichungsnummer: WO 2011/144291

(56) Entgegenhaltungen:
- DE-A1-102004 023 505
- US-A- 6 006 151
- US-A1- 2010 108 415
- US-B1- 6 553 301

## Beschreibung

Die Erfindung betrifft eine Vorrichtung zum Energiemanagement in einem Elektrofahrzeug nach dem Oberbegriff des Patentanspruches 1 sowie ein Verfahren zum Energiemanagement in einem Elektrofahrzeug nach dem Patentanspruch 7.

Bei einer fahrertypabhängigen Steuerung eines Kraftfahrzeuges kann insbesondere das dynamische Fahrverhalten des Fahrzeugs an eine sparsame oder eine sportliche Fahrweise des Fahrers angepasst werden. Damit das Steuerungssystem entsprechende Betriebsparameter einstellen kann, sind Informationen über den jeweiligen Fahrertyp notwendig.

Aus der DE 10 2004 023 512 A1 ist ein Elektrofahrzeug mit einer Vorrichtung zum Energiemanagement bekannt. Das Fahrzeug weist zumindest eine Elektromaschine zum Antrieb der Fahrzeugräder auf. Die Elektromaschine wird von einem Energiespeicher mit elektrischer Energie versorgt, wobei der Ladezustand des Energiespeichers beim Laden und beim Entladen variiert. Darüberhinaus weist die Fahrzeugsteuerung eine Fahrertyp-Erkennung, bei der ein sportlicher oder einer sparsamer Fahrer erkannt werden kann.

Die Fahrertyp-Erkennung kann aus der während des Fahrbetriebs erfolgenden Betätigung des Fahrpedals hergeleitet werden. Hierfür können die Winkelstellungen sowie die Änderungsgeschwindigkeit bei Betätigung des Fahrpedals erfasst werden. Alternativ oder zusätzlich können Informationen über den Fahrertyp auch aus der Betätigung eines Handschaltgetriebes hergeleitet werden. Zur Erfassung dieser Parameter sind umfangreiche sensortechnische Maßnahmen erforderlich, die außerdem mit einem großen Bauteilaufwand verbunden sind.

Aus der US 2010/0108415 A ist eine gattungsgemäße Vorrichtung zum Energiemanagement in einem Elektrofahrzeug bekannt. In der Vorrichtung erfolgt eine Fahrertyp-Erkennung, bei der der Entladevorgang einer Traktionsbatterie erfasst wird und anhand des zeitlichen Verlaufes des Ladezustands der Traktionsbatterie der Fahrertyp ermittelt wird. Aus der US 6 553 301 B1 ist ein System sowie ein Verfahren zum optimalen Kraftstoff-Management in einem Fahrzeug bekannt, und zwar in Abhängigkeit vom jeweiligen Fahrertyp.

Die Aufgabe der Erfindung besteht darin, eine Vorrichtung oder ein Verfahren zum Energiemanagement in einem Elektrofahrzeug bereitzustellen, mit dem eine einfache und einwandfreie Fahrertyp-Erkennung durchführbar ist.

Die Aufgabe ist durch die Merkmale des Patentanspruches 1 oder des Patentanspruches 7 gelöst. Bevorzugte Weiterbildungen der Erfindung sind in den Unteransprüchen offenbart.

Gemäß dem Patentanspruch 1 überwacht die Fahrertyp-Erkennungseinrichtung während eines Fahrbetriebs den Entladevorgang des Energiespeichers, das heißt der Hochvoltbatterie zur Energieversorgung der Elektromaschine, und ermittelt daraus den Fahrertyp. Bei Erfassung eines beschleunigten Entladevorgangs kann daher ein sportlicher Fahrertyp ermittelt werden. Bei Erfassung eines verzögerten Entladevorgangs kann dagegen ein ökonomischer Fahrertyp ermittelt werden.

Der Erfindung liegt daher die Erkenntnis zugrunde, dass der Verlauf des während eines Fahrbetriebsintervalls erfolgenden Entladevorgangs Rückschlüsse über die Art und Weise zulässt, wie die Leistungsanforderung des Fahrers erfolgt. Da die Leistungselektronik des Energiespeichers ohnehin den Lade- und auch den Entladevorgang des Energiespeichers überwacht, kann die erfindungsgemäße Fahrertyp-Erkennung bereits mit geringem Aufwand realisiert werden, ohne dass der Einbau zusätzlicher Sensorelemente erforderlich wäre.

Für die Überwachung des Entladevorgangs weist die Fahrertyp-Erkennungseinrichtung eine Erfassungseinheit auf. Diese erfasst den zeitlichen Verlauf des Ladezustands des Energiespeichers oder damit korrelierende Messgrößen, etwa den Energiespeicher-Strom oder dessen Spannung. Derartige Messgeräte können bereits in der Leistungselektronik des Energiespeichers integriert sein, so dass die bereits bestehenden Messgeräte erfindungsgemäß in Doppelfunktion auch für die Fahrertyp-Erkennung einsetzbar sind.

Um ein Maß für die vom Fahrer über einen bestimmten Zeitraum angeforderte Fahrzeug-Leistung zu erhalten, kann die Erfassungseinheit den Ladezustand zu Beginn eines Fahrbetriebsintervalles sowie den Ladezustand am Ende des Fahrbetriebintervalles erfassen und daraus einen Differenzwert bestimmen. Aus dem Differenzwert kann in einer signaltechnisch der Erfassungseinheit nachgelagerten Auswerteeinheit der Fahrertyp hergeleitet werden.

Bevorzugt kann die Erfassungseinheit aus dem Differenzwert einen Gradienten über das Fahrbetriebsintervall bestimmen. Dieser Gradient kann in der Auswerteeinheit mit einem darin hinterlegten Schwellwert verglichen werden, wobei auf Grundlage des Vergleiches die Auswerteeinheit den Fahrertyp erkennen kann. Die Auswerteeinheit ist darüberhinaus in Signalverbindung mit einer zentralen elektronischen Steuereinrichtung des Kraftfahrzeuges. Nach erfolgter Fahrertyp-Erkennung wird daher ein entsprechendes Fahrertyp-Signal zur Steuereinrichtung geleitet. Diese kann auf der Grundlage des Fahrertyp-Signals insbesondere das dynamische Verhalten des Fahrzeuges entsprechend anpassen.

Die Messung des Ladezustands des Energiespeichers kann in dessen Leistungselektronik durch eine Messung des bei einer fahrerseitigen Leistungsanforderung abfließenden Energiespeicher-Stroms ausgeführt werden, der über die Zeit integriert wird. Alternativ und/oder zusätzlich kann die oben erwähnte Auswerteeinheit den Entladevorgang des Energiespeichers auch auf andere Weise erfassen und mit entsprechend hinterlegten Schwellwerten vergleichen sowie auf der Grundlage des Vergleiches den Fahrertyp erkennen.

So wird erfindungsgemäß zur Erfassung des Ladezustands der zeitliche Verlauf der Energiespeicher-Spannung erfasst, der mit dem Ladezustand des Energiespeichers korreliert, wobei während des Fahrbetriebs das Zeitverhalten des Ladezustands deutlich träger ist als das Zeitverhalten der Energiespeicher-Spannung. Bei der Überwachung des Entladevorganges anhand des zeitlichen Spannungsverlaufs ergibt sich die Besonderheit, dass es bei hohen fahrerseitigen Leistungsanforderungen im Energiespeicher zu kurzzeitigen Spannungseinbrüchen kommt. Diese Spannungseinbrüche finden sich im zeitlichen Verlauf der Energiespeicher-Spannung wieder, nicht jedoch im weitaus trägeren zeitlichen Verlauf des Energiespeicher-Ladezustandes. Die Spannungseinbrüche können erfindungsgemäß zur Fahrertyp-Erkennung genutzt werden. Hierzu kann die Auswerteeinheit die während des Fahrbetriebsintervalles auftretenden Spannungseinbrüche hinsichtlich Gradient, Größe, Zeitdauer und/oder Anzahl erfassen und mit Schwellwerten vergleichen, die in der Auswerteeinheit hinterlegt sind.

Beispielhaft können in der Auswerteeinheit unterschiedliche Fahrertyp-Profile hinterlegt sein, die jeweils verschiedene Schwellwerte für den Gradienten, die Größe, die Zeitdauer und/oder die Anzahl der Spannungseinbrüche enthalten. Bei einer Übereinstimmung mit einem dieser Profile kann die Auswerteeinheit ein entsprechendes Fahrertyp-Signal an die zentrale elektronische Steuereinrichtung weiterleiten.

Nachfolgend ist ein Ausführungsbeispiel der Erfindung anhand der beigefügten Figuren beschrieben.

Es zeigen:
- Fig. 1: in einer schematischen Ansicht ein Antriebssystem eines Elektrofahrzeugs;
- Fig. 2: jeweils Zeitdiagramme einer fahrerseitigen Momentenanforderung, des Ladezustands der Fahrzeugbatterie sowie der Batterie-Spannung während eines Fahrbetriebs;
- Fig. 3: ein Antriebssystem gemäß dem Ausführungsbeispiel.

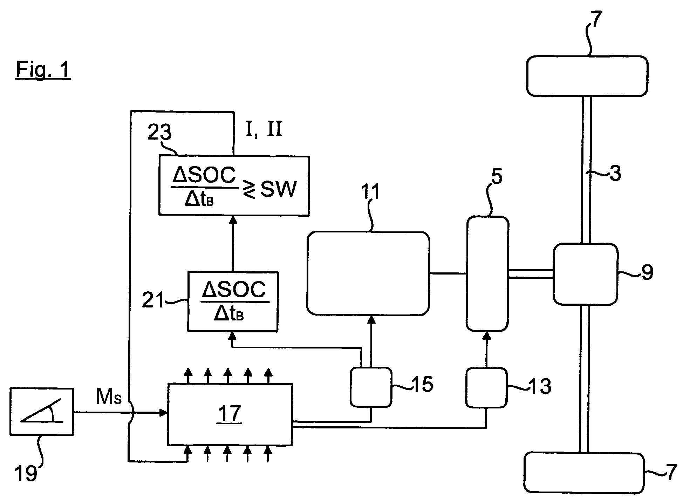

In der Fig. 1 ist in einer Prinzipdarstellung das Antriebssystem eines Elektrofahrzeuges gezeigt, das hier beispielhaft lediglich an einer Fahrzeugachse 3 angetrieben ist. An der Fahrzeugachse 3 ist eine Elektromaschine 5 in einen Antriebsstrang geschaltet, der die beiden Fahrzeugräder 7 über ein Achsdifferenzial 9 antreibt. Die Elektromaschine 5 ist in elektrischer Verbindung mit einer als Energiespeicher vorgesehenen Hochvoltbatterie 11, die je nach Fahrbetrieb zur Stromversorgung der Elektromaschine 5 entladen wird oder in einem Rekuperationsbetrieb von der als Generator arbeitenden Elektromaschine 5 aufgeladen wird. Die weiteren Antriebskomponenten, etwa die Leistungselektronik 13 der Elektromaschine 5 oder das Batteriesteuergerät 15 sind aus Gründen der Übersichtlichkeit ohne nähere Beschreibung nur grob in der Fig. 1 angedeutet.

Für die Ansteuerung der Hochvoltbatterie 11 und der Elektromaschine 5 ist eine zentrale elektronische Steuereinrichtung 17 vorgesehen. Die Steuereinrichtung 17 erfasst über ein Pedalmodul 19 eine fahrerseitig vorgenommene Änderung des Fahrpedalwinkels. Zusätzlich erfasst die Steuereinrichtung 17 als Eingangsparameter unter anderem eine verfügbare Batterieleistung, die Wirkungsgradkennfelder der Elektromaschine, Umgebungs- beziehungsweise Aggregate-Temperaturen, Fahrdynamikgrenzen, Lastpunkte der Elektromaschine 5 sowie die Fahrzeuggeschwindigkeit, den eingelegten Gang oder dergleichen.

Auf der Grundlage dieser Eingangsgrößen berechnet die Steuereinrichtung 17 ein Sollmoment Mₛ, mit dem das Motorsteuergerät 13 angesteuert wird.

Das Batteriesteuergerät 15 der Hochvoltbatterie 11 ist mit hier nicht näher dargestellten Messeinheiten ausgestattet, auf deren Grundlage ein Entladevorgang beziehungsweise ein Ladevorgang in der Hochvoltbatterie 11 überwacht werden kann. Hierfür kann mittels des Batteriesteuergerätes 15 der zur Elektromaschine 5 abfließende Strom, die Batterie-Spannung oder auch der Ladezustand SOC überwacht werden.

Erfindungsgemäß ist das Batteriesteuergerät 15 Teil einer Fahrertyp-Er-kennungseinrichtung, mit deren Hilfe die zentrale elektronische Steuereinrichtung 17 das dynamische Fahrverhalten des Fahrzeuges an den jeweiligen Fahrer anpassen kann. Hierzu wird der während des Fahrbetriebs erfolgende Entladevorgang des Energiespeichers 11 überwacht und dient der Entladevorgang als ein Maß für die vom Fahrer über einen bestimmten Zeitraum angeforderte Leistung des Fahrzeugs.

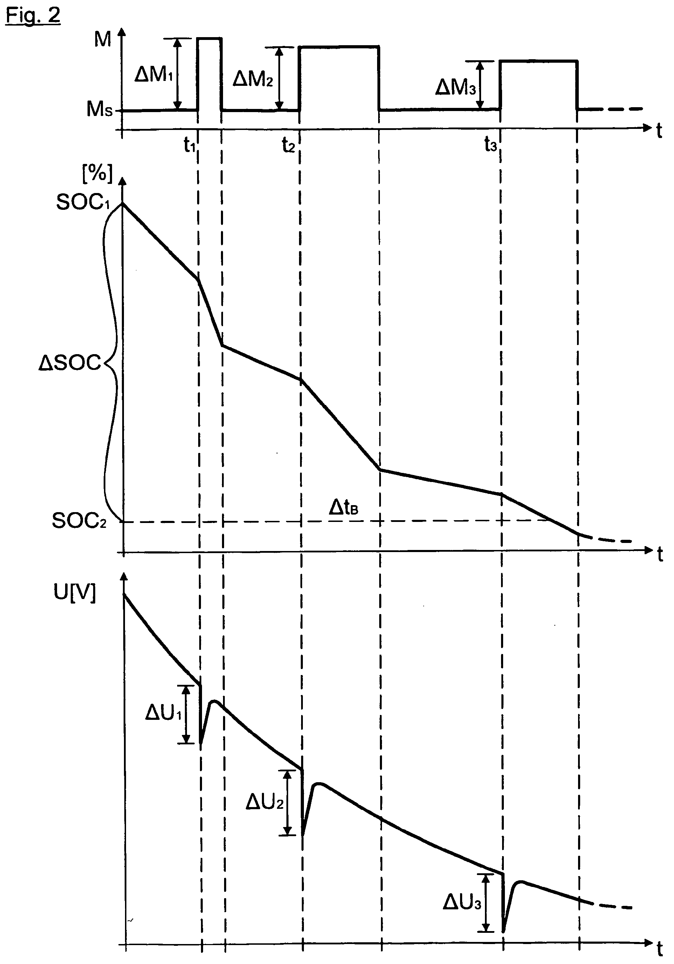

In der Fig. 2 sind drei Zeitdiagramme gezeigt, die einen beispielhaften Entladevorgang des Energiespeichers 11 während eines Fahrbetriebsintervalles t_{b} veranschaulichen sollen. Der Entladevorgang ergibt sich hier bei einer mittels des Pedalmoduls 19 beispielhaft eingestellten Sollmomentvorgabe Mₛ. Die Sollmomentvorgabe Mₛ wird bei bestimmten Fahrsituationen, etwa bei Überholvorgängen, zu den Zeitpunkten t₁, t₂ und t₃ kurzzeitig um Differenzwerte ΔM₁, ΔM₂ und ΔM₃ sprunghaft erhöht. Der sich daraus ergebende Entladevorgang in der Hochvoltbatterie 11 ist in den darunter angeordneten Zeitdiagrammen veranschaulicht, die den zeitlichen Verlauf des Batterie-Ladezustands SOC und der Batterie-Spannung U darstellen. Demzufolge fallen sowohl die Ladezustands-Kurve als auch die Spannungs-Kurve während des Fahrbetriebsintervalls t_{B} kontinuierlich ab. Während der sprunghaften Erhöhungen ΔM₁, ΔM₂, ΔM₃ der Momentenvorgabe reagiert die Hochvoltbatterie 11 mit einer verstärkten Reduzierung der Batterie-Ladung SOC. Die in der Fig. 2 gezeigte Ladezustands-Kurve fällt daher im Bereich dieser sprunghaften Erhöhungen ΔM₁, ΔM₂, ΔM₃ mit größerem Gradienten ab. Entsprechend reagiert die Hochvoltbatterie 11 auf die erhöhten fahrerseitigen Momentenanforderungen mit kurzzeitigen Spannungseinbrüchen ΔU₁, ΔU₂ und ΔU₃, die sich im zeitlichen Verlauf der Batterie-Spannung U wiederfinden.

Gemäß dem in der Fig. 1 gezeigten, nicht von der Erfindung umfassten Vergleichsbeispiel weist die Fahrzeugtyp-Erkennungseinrichtung eine Erfassungseinheit 21 und eine in Signalflussrichtung nachgeschaltete Auswerteeinheit 23 auf. Die Erfassungseinheit 21 erfasst einen ersten Ladezustand SOC₁ zu Beginn des Fahrbetriebsintervalls Δt_{B} und einen zweiten Ladezustand SOC₂ am Ende des Fahrbetriebsintervalls Δt_{B} und ermittelt daraus einen Differenzwert ΔSOC. Aus diesem Differenzwert bestimmt die Erfassungseinheit 21 einen Gradienten ΔSOC/Δt_{B}. Dieser Gradient wird in der Auswerteeinheit 23 mit einem hinterlegten Schwellwert verglichen. Auf der Grundlage dieses Vergleiches bestimmt die Auswerteeinheit 23 einen Fahrertyp I mit sportlicher Fahrweise oder einen Fahrertyp II mit ökonomischer Fahrweise. Die Auswerteeinheit 23 leitet darauffolgend ein entsprechendes Fahrertyp-Signal I oder II zur zentralen elektronischen Steuereinrichtung 17.

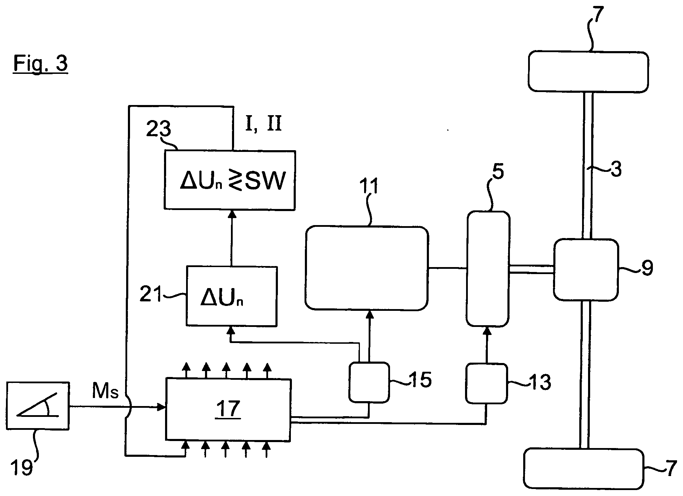

In der Fig.3 ist eine Fahrertyp-Erkennungseinrichtung gemäß dem Ausführungsbeispiel gezeigt. Der grundsätzliche Aufbau des Fahrzeug-Antriebssystems ist dabei identisch mit dem aus der Fig. 1. Im Unterschied zur Fig. 1 wird zur Überwachung des Entladevorgangs der zeitliche Verlauf der Hochvoltbatterie-Spannung U erfasst. Die Erfassungseinrichtung 21 detektiert hierbei die kurzzeitigen Spannungseinbrüche ΔU₁, ΔU₂ und ΔU₃, die hinsichtlich ihrer Größe, ihrer Zeitdauer und/oder ihrer Anzahl n erfasst werden. Die Spannungseinbrüche ΔU₁, ΔU₂, und ΔU₃ werden darauffolgend in der Auswerteeinheit 23 mit Fahrertyp-Profilen I, II verglichen, in denen jeweils Schwellwerte hinterlegt sind, die typisch für einen sportlichen Fahrer beziehungsweise für einen ökonomischen Fahrer sind. Auf der Grundlage dieses Vergleiches generiert die Auswerteeinheit 23 ein Fahrertyp-Signal I, II, das zur zentralen elektronischen Steuereinrichtung 17 weitergeleitet wird.

## Patentansprüche

1. Vorrichtung zum Energiemanagement in einem Elektrofahrzeug, das zumindest teilweise von einer Elektromaschine (11) antreibbar ist, die von einem Akkumulator (11) mit elektrischer Energie versorgbar ist, wobei dessen Ladezustand (SOC) beim Laden und Entladen variiert, und mit einer Fahrertyperkennungseinrichtung (15, 21, 23) zur Bestimmung eines Fahrertyps (I, II), wobei die Fahrertyp-Erkennungseinrichtung während eines Fahrbetriebs den Entladevorgang des Akkumulators (11) überwacht und daraus den Fahrertyp (I, II) ermittelt, wobei die Fahrertyp-Erkennungseinrichtung (15, 21, 23) eine Erfassungseinheit (21) aufweist, die zur Überwachung des Entladevorgangs den zeitlichen Verlauf des Ladezustands (SOC) des Akkumulators (11) oder damit korrelierende Messgrößen, etwa Strom oder Spannung, erfasst, **dadurch gekennzeichnet, dass** die Erfassungseinheit (21) den zeitlichen Verlauf der Akkumulator-Spannung (U) erfasst, wobei aufgrund hoher, fahrerseitiger Leistungsanforderungen (ΔM₁, ΔM₂, ΔM₃) kurzzeitige Spannungseinbrüche (ΔU₁, ΔU₂, ΔU₃) im zeitlichen Verlauf der Akkumulator-Spannung (U) auftreten, und dass die Erfassungseinheit (21) die Größe, Zeitdauer und/oder Anzahl (n) der während eines Fahrbetriebsintervalls (Δt_{B}) auftretenden Spannungseinbrüche (ΔU₁, ΔU₂, ΔU₃) erfasst..

2. Vorrichtung nach Anspruch 1, **dadurch gekennzeichnet, dass** die Erfassungseinheit (21) den Ladezustand (SOC₁) zu Beginn eines Fahrbetriebsintervalls (Δt_{B}) und den Ladezustand (SOC₂) am Ende des Fahrbetriebsintervalls (Δt_{B}) erfasst und daraus einen Differenzwert (ΔSOC) bestimmt.

3. Vorrichtung nach Anspruch 2, **dadurch gekennzeichnet, dass** die Erfassungseinheit (21) aus dem Differenzwert (ΔSOC) einen Gradienten (ΔSOC/Δt_{B}) über das Fahrbetriebsintervall (Δt_{B}) bestimmt.

4. Vorrichtung nach einem der vorhergehenden Ansprüche, **dadurch gekennzeichnet, dass** die Fahrertyp-Erkennungseinrichtung (15, 21, 23) eine Auswerteeinheit (23) aufweist, die den Entladevorgang des Akkumulators (11) mit in der Auswerteeinheit (23) hinterlegten Schwellwerten (SW) vergleicht und auf der Grundlage des Vergleichs den Fahrertyp (I, II) erkennt.

5. Vorrichtung nach Anspruch 4, **dadurch gekennzeichnet, dass** die Auswerteeinheit (23) den von der Erfassungseinheit (21) bestimmten Ist-Gradient (ΔSOC/Δt_{B}) mit einem Schwellwert (SW) vergleicht.

6. Vorrichtung nach einem der vorhergehenden Ansprüche, **dadurch gekennzeichnet, dass** die Auswerteeinheit (23) die erfassten Spannungseinbrüche (ΔU₁, ΔU₂, ΔU₃), insbesondere hinsichtlich Größe, Zeitdauer und/oder Anzahl (n) mit in der Auswerteeinheit (23) hinterlegten Schwellwerten vergleicht und auf der Grundlage des Vergleichs den Fahrertyp (I, II) erkennt.

7. Verfahren zum Energiemanagement in einer Vorrichtung nach einem der vorhergehenden Ansprüche.

## Claims

1. Device for energy management in an electric vehicle, which electric vehicle can be at least partially driven by an electric machine (11) which can be supplied with electrical energy by a battery (11), wherein the state of charge (SOC) of the latter varies during charging and discharging, and comprising a driver type recognition device (15, 21, 23) for determining a driver type (I, II), wherein during a driving mode the driver type recognition device monitors the discharging process of the battery (11) and determines the driver type (I, II) therefrom, wherein the driver type recognition device (15, 21, 23) has a detection unit (21) which, in order to monitor the discharging process, detects the temporal curve of the state of charge (SOC) of the battery (11) or measurement parameters correlating therewith, for instance current or voltage, **characterised in that** the detection unit (21) detects the temporal curve of the battery voltage (U), wherein brief voltage drops (ΔU₁, ΔU₂, ΔU₃) occur in the temporal curve of the battery voltage (U) as a result of high power demands (ΔM₁, ΔM₂, ΔM₃) from a driver, and **in that** the detection unit (21) detects the magnitude, duration and/or number (n) of the voltage drops (ΔU₁, ΔU₂, ΔU₃) occurring during a driving mode interval (Δt_{B}).

2. Device according to claim 1, **characterised in that** the detection unit (21) detects the state of charge (SOC₁) at the start of a driving mode interval (Δt_{B}) and the state of charge (SOC₂) at the end of the driving mode interval (Δt_{B}) and determines a difference value (ΔSOC) therefrom.

3. Device according to claim 2, **characterised in that** the detection unit (21) determines from the difference value (ΔSOC) a gradient (ΔSOC/Δt_{B}) over the driving mode interval (Δt_{B}).

4. Device according to any one of the preceding claims, **characterised in that** the driver type recognition device (15, 21, 23) has an evaluation unit (23) which compares the discharging process of the battery (11) with threshold values (SW) stored in the evaluation unit (23) and recognises the driver type (I, II) on the basis of the comparison.

5. Device according to claim 4, **characterised in that** the evaluation unit (23) compares the actual gradient (ΔSOC/Δt_{B}) determined by the detection unit (21) with a threshold value (SW).

6. Device according to any one of the preceding claims, **characterised in that** the evaluation unit (23) compares the detected voltage drops (ΔU1, ΔU2, ΔU3), in particular with regard to magnitude, duration and/or number (n), with threshold values stored in the evaluation unit (23) and recognises the driver type (I, II) on the basis of the comparison.

7. Method for energy management in a device according to any one of the preceding claims.

## Revendications

1. Dispositif de gestion de l'énergie dans un véhicule électrique, qui peut être entraîné au moins en partie par un moteur électrique (11) qui peut être alimenté en énergie électrique par un accumulateur (11), dont l'état de charge (SOC) varie à la charge et à la décharge et avec un dispositif de reconnaissance de type de conduite (15, 21, 23) pour déterminer un type de conduite (I, II), dans lequel le dispositif de reconnaissance de type de conduite surveille, au cours d'un trajet, le processus de décharge de l'accumulateur (11) et en déduit le type de conduite (I, II), dans lequel le dispositif de reconnaissance de type de conduite (15, 21, 23) présente une unité de détection (21), qui détecte, pour la surveillance du processus de décharge, l'évolution dans le temps de l'état de charge (SOC) de l'accumulateur (11) ou de grandeurs de mesure corrélées à celui-ci, notamment le courant ou la tension, **caractérisé en ce que** l'unité de détection (21) détecte l'évolution dans le temps de la tension de l'accumulateur (U), dans lequel, sur la base de conditions de prestations plus élevées côté conduite (ΔM₁, ΔM₂, ΔM₃), il apparaît des chutes de tension de courte durée (ΔU₁, ΔU₂, ΔU₃) dans l'évolution dans le temps de la tension d'accumulateur (U) et l'unité de détection (21) détecte la grandeur, la durée et/ou le nombre (n) des chutes de tension (ΔU₁, ΔU₂, ΔU₃) apparaissant au cours d'un intervalle de parcours (Δt_{B}).

2. Dispositif selon la revendication 1, **caractérisé en ce que** l'unité de détection (21) détecte l'état de charge (SOC₁) au début d'un intervalle de déplacement (Δt_{B}) et l'état de charge (SOC₂) à la fin de l'intervalle de déplacement (Δt_{B}) et en tire une valeur de différence (ΔSOC).

3. Dispositif selon la revendication 2, **caractérisé en ce que** l'unité de détection (21) détermine à partir de la valeur de différence (ΔSOC) un gradient (ΔSOC/Δt_{B}) sur l'intervalle de déplacement (Δt_{B}).

4. Dispositif selon l'une quelconque des revendications précédentes, **caractérisé en ce que** le dispositif de reconnaissance du type de conduite (15, 21, 23) présente une valeur d'évaluation (23) qui compare le processus de décharge de l'accumulateur (11) à des valeurs de seuil (SW) stockées dans l'unité d'évaluation (23) et reconnaît le type de conduite (I, II) sur la base de la comparaison.

5. Dispositif selon la revendication 4, **caractérisé en ce que** l'unité d'évaluation (23) compare le gradient théorique (ΔSOC/Δt_{B}) déterminé par l'unité de détection (21) à une valeur de seuil (SW).

6. Dispositif selon l'une quelconque des revendications précédentes, **caractérisé en ce que** l'unité d'évaluation (23) compare les chutes de tension détectées (ΔU₁, ΔU₂, ΔU₃), en particulier en ce qui concerne la grandeur, la durée et/ou le nombre (n) à des valeurs de seuil stockées dans l'unité d'évaluation (23) et reconnaît le type de conduite (I, II) sur la base de la comparaison.

7. Procédé de gestion d'énergie dans un dispositif selon l'une quelconque des revendications précédentes.
